# EUROPEAN PATENT SPECIFICATION

(11) **EP 4 524 923 B1**
(45) Date of publication and mention of the grant of the patent: **28.10.2026**
(21) Application number: 24199749.3
(22) Date of filing: 11.09.2024
(51) Int. Cl.: G08B 13/196, H04N 7/18, G08B 3/10

(54) **SMART DOORBELL**
INTELLIGENTE TÜRKLINGEL
SONNETTE INTELLIGENTE

(30) Priority: 15.09.2023 US 202318467829
(43) Date of publication of application: 19.03.2025
(73) Proprietor: Roku, Inc., San Jose, CA 95110 (US)
(72) Inventor: RIISE, Soren, San Jose, 95110 (US); SAKSENA, Manas C., San Jose, 95110 (US); CURTIS, Robert C., San Jose, 95110 (US)
(74) Representative: Mewburn Ellis LLP

(56) References cited:
- US-A1- 2021 377 493
- US-A1- 2022 086 402

## Description

### BACKGROUND

### FIELD

This disclosure is generally directed to signaling devices, and more particularly, to a smart doorbell.

US2021/0377493 discloses a smart home environment.

US2022/0086402 discloses a doorbell.

### SUMMARY

The invention is defined in the appended independent claims. Provided herein are system, method and/or computer program product embodiments for a smart doorbell comprising a housing. An activation of a user interface element of the smart doorbell is detected. In response to detecting the activation of the user interface element, a determination is made that a doorbell chime is to be activated based on one or more rules, a first signal to activate the doorbell chime is caused to be transmitted, and a wireless signal is transmitted to at least one video camera that is not included within the housing. The wireless signal causes the at least one video camera to activate and provide a video stream.

In an embodiment, the one or more rules specify a time period within which the doorbell chime may be activated, and determining that the doorbell chime is to be activated based on the one or more rules comprises determining that the activation of the user interface element of the smart doorbell is detected during the time period.

In another embodiment, determining that the doorbell chime is to be activated based on the one or more rules comprises selecting the doorbell chime from among a plurality of doorbell chimes based on the one or more rules, wherein the one or more rules specify which doorbell chime from the plurality of doorbell chimes is to be activated based on a time period in which the user interface element of the smart doorbell is activated.

The number of times the determined doorbell chime is to be activated is determined based on the one or more rules. Causing the first signal to be transmitted to activate the doorbell chime comprises causing the first signal to be transmitted in accordance with the number of times.

In still another embodiment, determining that the doorbell chime is to be activated based on the one or more rules comprises selecting the doorbell chime from among a plurality of doorbell chimes based on the one or more rules, wherein the one or more rules specify which doorbell chime from the plurality of doorbell chimes is to be activated based on a user that activates the user interface element of the smart doorbell.

In a further embodiment, causing the first signal to be transmitted to activate the doorbell chime comprises at least one of causing the first signal to be transmitted to a doorbell chime speaker external to the housing via a wired connection, or wirelessly transmitting the first signal to a wireless speaker external to the housing.

In yet a further embodiment, a second wireless signal is transmitted to a display device external to the housing that causes the display device to perform at least one of transitioning itself to a power on state, or displaying the video stream.

### BRIEF DESCRIPTION OF THE FIGURES

The accompanying drawings are incorporated herein and form a part of the specification.
FIG. 1 illustrates a block diagram of a multimedia environment, according to some embodiments.
FIG. 2 illustrates a block diagram of a streaming media device, according to some embodiments.
FIG. 3 illustrates a block diagram of a system comprising a smart doorbell communicatively coupled to a plurality of Internet-of-Things (IoT) devices, according to some embodiments.
FIG. 4 is a diagram of an isometric view of a premise at which a smart doorbell may be utilized, according to some embodiments.
FIG. 5 is a flowchart for a method performed by a smart doorbell, according to an embodiment.
FIG. 6 is a flowchart for a method for determining a number of times a doorbell chime is to be activated, according to an embodiment.
FIG. 7 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

A doorbell is a signaling device that is typically placed near a door of a building's entrance. The doorbell includes a button, that when pressed, causes a doorbell chime to be played inside the building, thereby alerting the occupants of the building of the presence of a visitor at the door. Certain doorbells incorporate a video camera therewith as a single unit, which allows occupants to view the person at the door without having to open the door. However, incorporating video cameras with a doorbell greatly increases the form factor of the doorbell, which makes installation of the doorbell more difficult. Moreover, such doorbells are often battery-powered. The operation of the video camera causes a significant reduction in the life of the battery.

Embodiments described herein may address some or all of the foregoing issues related to doorbell/video camera combination units. For instance, a smart doorbell that does not include a video camera is described herein. The smart doorbell may comprise one or more wireless interfaces that enable wireless communication with one or more Internet-of-Things (IoT) devices, such as one or more smart video cameras, upon activation of a user interface element (e.g., a button) of the smart doorbell.

An activation of a user interface element of the smart doorbell is detected. In response to detecting the activation of the user interface element, a determination is made that a doorbell chime is to be activated based on one or more rules, a first signal to activate the doorbell chime is caused to be transmitted, and a wireless signal is transmitted to at least one video camera that is not included within the housing. The wireless signal causes the at least one video camera to activate and provide a video stream.

The disaggregation of the smart doorbell and the smart video cameras enables a smaller form factor, which provides flexibility for install locations. The disaggregation also provides flexibility in the placement of the smart video cameras, such that a user can place a smart video camera in a location that provides a better field of view than if it were included with the doorbell, where it may suffer from certain obstructions, such as shrubbery, trees, or signage. Lastly, by not incorporating the video camera with the doorbell, the battery life of the doorbell may be preserved. Accordingly, the techniques described herein improve the functioning of a device (e.g., a smart doorbell), as such a device is able to operate for longer periods due to the extended battery life.

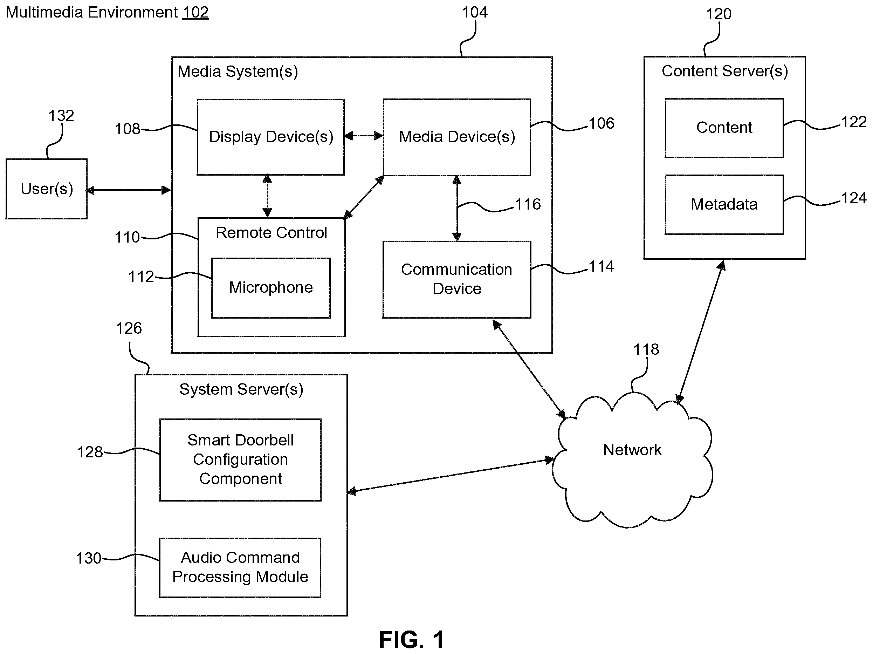

Various embodiments of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

The multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some embodiments, media device 106 can be a part of, integrated with, operatively coupled to, and/or connected to its respective display device 108.

Each media device 106 may be configured to communicate with network 118 via a communication device 114. The communication device 114 may include, for example, a cable modem or satellite TV transceiver. The media device 106 may communicate with the communication device 114 over a link 116, wherein the link 116 may include wireless (such as WiFi) and/or wired connections.

In various embodiments, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 can be any component, part, apparatus and/or method for controlling the media device 106 and/or display device 108, such as a remote control, a tablet, laptop computer, smartphone, wearable, on-screen controls, integrated control buttons, audio controls, or any combination thereof, to name just a few examples. In an embodiment, the remote control 110 wirelessly communicates with the media device 106 and/or display device 108 using cellular, Bluetooth, infrared, Wi-Fi, etc., or any combination thereof. The remote control 110 may include a microphone 112, which is further described below.

The multimedia environment 102 may include a plurality of content servers 120 (also called content providers, channels or sources 120). Although only one content server 120 is shown in FIG. 1, in practice the multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form.

In some embodiments, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122.

The multimedia environment 102 may include one or more system servers 126. The system servers 126 may operate to support the media devices 106 from the cloud. It is noted that the structural and functional aspects of the system servers 126 may wholly or partially exist in the same or different ones of the system servers 126.

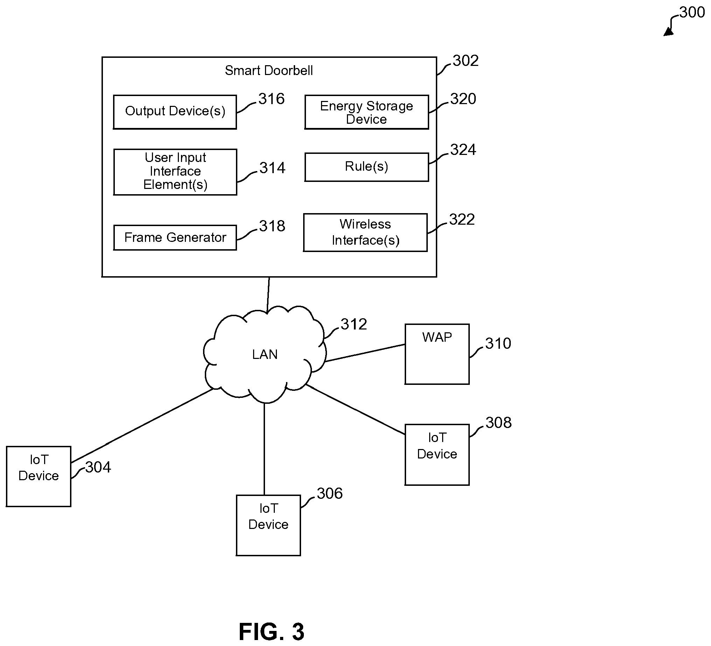

The system servers 126 may include a smart doorbell configuration component 128. Smart doorbell configuration component 128 may be configured to maintain and provide one or more rules for determining whether a particular doorbell chime is to be activated. Smart doorbell configuration component 128 may also be configured to store and provide one or more doorbell chimes. Such doorbell chime(s) may be stored as audio file(s). Smart doorbell configuration component 128 also comprises a biometric-based user recognition application that is configured to identify a user based on a biometric feature of the user using facial recognition techniques. Namely, smart doorbell configuration component 128 receives an image of a face of a user and/or an indication of facial characteristics of the user, and performs facial recognition of the user to identify the user.. The rule(s) may comprise user-based rule(s) that specify whether a particular doorbell chime is to be activated based on the identified user. Smart doorbell configuration component 128 may provide the rule(s) and/or an indication of the identified user to a smart doorbell (e.g., smart doorbell 302, as described below with reference to FIG. 3). Additional details regarding smart doorbell 302 are described below with respect to FIG. 3.

The system servers 126 may also include an audio command processing module 130. As noted above, the remote control 110 may include a microphone 112. The microphone 112 may receive audio data from users 132 (as well as other sources, such as the display device 108). In some embodiments, the media device 106 may be audio responsive, and the audio data may represent verbal commands from the user 132 to control the media device 106 as well as other components in the media system 104, such as the display device 108.

In some embodiments, the audio data received by the microphone 112 in the remote control 110 is transferred to the media device 106, which is then forwarded to the audio command processing module 130 in the system servers 126. The audio command processing module 130 may operate to process and analyze the received audio data to recognize the user 132's verbal command. The audio command processing module 130 may then forward the verbal command back to the media device 106 for processing.

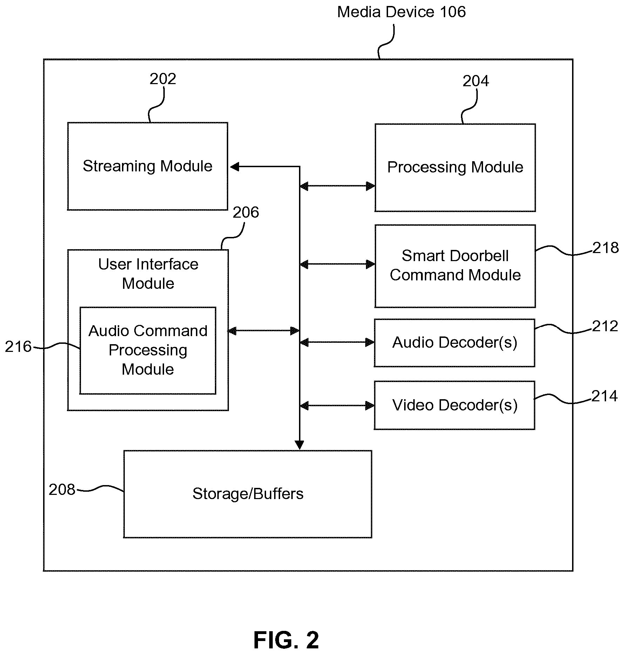

In some embodiments, the audio data may be alternatively or additionally processed and analyzed by an audio command processing module 216 in the media device 106 (see FIG. 2). The media device 106 and the system servers 126 may then cooperate to pick one of the verbal commands to process (either the verbal command recognized by the audio command processing module 130 in the system servers 126, or the verbal command recognized by the audio command processing module 216 in the media device 106).

FIG. 2 illustrates a block diagram of an example media device 106, according to some embodiments. Media device 106 may include a streaming module 202, processing module 204, storage/buffers 208, and user interface module 206. As described above, the user interface module 206 may include the audio command processing module 216.

The media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some embodiments, the user 132 may interact with the media device 106 via, for example, the remote control 110. For example, the user 132 may use the remote control 110 to interact with the user interface module 206 of the media device 106 to select content, such as a movie, TV show, music, book, application, game, etc. The streaming module 202 of the media device 106 may request the selected content from the content server(s) 120 over the network 118. The content server(s) 120 may transmit the requested content to the streaming module 202. The media device 106 may transmit the received content to the display device 108 for playback to the user 132.

In streaming embodiments, the streaming module 202 may transmit the content to the display device 108 in real time or near real time as it receives such content from the content server(s) 120. In non-streaming embodiments, the media device 106 may store the content received from content server(s) 120 in storage/buffers 208 for later playback on display device 108.

### Smart Doorbell

As further shown in FIG. 2, media device 106 may include a smart doorbell command module 218. Smart doorbell command module 218 may be configured to receive commands from a smart doorbell (e.g., smart doorbell 302, as described below with reference to FIG. 3) and perform one or more actions, including but not limited to, activating a doorbell chime, transitioning itself to a power on state, displaying a video stream etc. Additional details regarding media device 106 are described below with reference to IoT devices 304, 306, and 308, as described below with reference to FIG. 3.

FIG. 3 illustrates a block diagram of a system 300 comprising a smart doorbell 302 communicatively coupled to a plurality of IoT devices, according to some embodiments. As shown in FIG. 3, system 300 includes smart doorbell 302 and IoT devices 304, 306, and 308. Smart doorbell 302 is also an IoT device. IoT devices 304, 306, and 308 may be examples of media device 106. System 300 may also include a wireless access point (WAP) 310. As described below, the usage of WAP 310 may be optional, and smart doorbell 302 and IoT devices 304, 206, and 308 may be enabled to communicate with each other (e.g., via Wi-Fi) without utilizing WAP 310. Although only four IoT devices (including smart doorbell 302) are shown for the sake of illustration, it should be understood that system 300 may include any number of IoT devices, including tens, hundreds or even thousands of IoT devices.

As used herein, the term "IoT device" is intended to broadly encompass any device that is capable of engaging in digital communication with another device. For example, a device that can digitally communicate with another device can comprise an IoT device, as that term is used herein, even if such communication does not occur over the Internet.

Each of IoT devices 304, 306, and 308 may comprise a device such as, for example, a smart phone, a laptop computer, a notebook computer, a tablet computer, a netbook, a desktop computer, a video game console, a set-top box, an OTT streaming media player, or media device 106. Furthermore, each of IoT devices 302, 304, and 306 may comprise a so-called "smart home" device such as, for example, a smart lightbulb, a smart switch, a smart refrigerator, a smart washing machine, a smart dryer, a smart coffeemaker, a smart alarm clock, a smart smoke alarm, a smart carbon monoxide detector, a smart security sensor, a smart indoor or outdoor video camera, a smart door lock, a smart thermostat, a smart window sensor, a smart motion sensor, a smart plug, a smart television, a smart speaker, a smart remote controller, or a voice controller. Smart doorbell 302 to which the present invention is limited is an example of a "smart home" device. Still further, each of IoT devices 304, 306, and 308 may comprise a wearable device such as a watch, a fitness tracker, a health monitor, a smart pacemaker, or an extended reality headset.

Smart doorbell 302, IoT devices 304, 306, and 308, and/or WAP 310 may be communicatively connected to a local area network (LAN) 312 via a suitable wired and/or wireless connection. In an embodiment, LAN 312 is implemented using a hub-and-spoke or star topology. For example, in accordance with such an embodiment, each of smart doorbell 302 and IoT devices 304, 306, and 308 may be connected to a router via a corresponding Ethernet cable, WAP 310, or IoT device hub. The router may include a modem that enables the router to act as an interface between entities connected to LAN 312 and an external wide area network (WAN), such as the Internet. In an alternate embodiment, LAN 312 is implemented using a mesh network topology. For example, in accordance with such an embodiment, one or more of smart doorbell 302 and IoT devices 304, 306, and 308 may be linked directly to the other three IoT devices such that it can communicate directly therewith utilizing unassociated media access control (MAC) frames without a router or WAP 310. Unassociated MAC frames may be MAC frames that are unassociated with WAP 310 (i.e., such MAC frames do not specify a base service set (BSS) identifier (ID) of WAP 310) and are locally administered (i.e., the universal/local (U/L) bit of the MAC addresses included in the MAC frame may be set to a value of 1, for example, by a user or network administrator during setup of the mesh network). When utilizing a mesh network, WAP 310 may not be utilized, and therefore, a connection to the Internet is not necessary. One advantage to such an approach is that devices of a mesh network are able to establish communication links with each other much more quickly, for example, in the event of power coming back on after a power outage. Conventional approaches require a hub and/or access point (e.g., WAP 310) to power on and establish an Internet connection before the mesh network is operable. This unnecessarily adds delay in using devices of the mesh network. Another advantage of utilizing such a mesh network is that a particular device (e.g., a smart video camera) may be commanded (e.g., by smart doorbell 302) to perform a particular operation (e.g., providing and/or recording a video stream) without the availability of WAP 310 and/or the Internet. A further advantage is attained in scenarios where devices of the mesh network are battery-powered. In such a scenario, there is no usage disruption even during a power loss, as such devices continue to operate as intended without a WAN or Internet connection. It is noted that these are examples only, and other techniques for implementing LAN 312 may be used.

As further shown in FIG. 3, smart doorbell 302 may comprise one or more user input interface elements 314, one or more output device(s) 316, a frame generator 318, an energy storage device 320, and one or more wireless interface(s) 322. Such components are included in a housing of smart doorbell 302. The housing may be made of any material including, but not limited, to plastic, metal, metal compounds, etc. Smart doorbell 302 may be configured for placement and attachment on any planar surface, including, but not limited to, a door, a door frame, siding (e.g., vinyl, aluminum, brick, etc.), a window sill, moulding, etc. Smart doorbell 302 may be attached to the planar surface via an adhesive, a fastener (e.g., one or more screws, bolts, etc.), etc. Smart doorbell 302 may be powered via energy storage device 320. Energy storage device 320 may comprise a battery (e.g., either a non-rechargeable or rechargeable battery), a capacitor, and/or the like. In some aspects, smart doorbell 302 may be installed in place of a conventional doorbell. In such aspects, smart doorbell 302 may be coupled to a transformer via one or more wires, which in turn is coupled to a power supply (e.g., an alternating current (AC) power supply) of a premise (e.g., a house, an office building, etc.) at which smart doorbell 302 is installed. The transformer and/or power supply may be utilized to charge energy storage device 320.

User input interface element(s) 314 may comprise any input interface element suitable to activate a doorbell chime upon activation. Examples of user input interface element(s) 314 include, but are not limited to, a button, a motion detector, a microphone, etc. In an example in which user input interface element(s) 314 comprises a button, a user may activate the doorbell chime by pressing the button. In an example in which user input interface element(s) 314 comprise a motion detector, a user may activate the doorbell chime by moving in proximity to motion detector such that the motion detector detects the motion of the user. In an example in which user input interface element(s) 314 comprise a microphone, a user may activate the doorbell chime by making a sound or by uttering an activation phase.

Upon activation of user input interface element(s) 314, output device(s) 316 may be activated to provide an indication that the user's input has been received and/or to indicate a doorbell chime has been activated. Examples of output device(s) 316 include, but are not limited to, one or more light emitting diodes (LEDs), a speaker, etc. For example, upon activation of user input interface element(s) 314, a signal may be provided to the LED(s) causing LED(s) to be activated. In another example, the signal may cause playback of a doorbell chime via the speaker. The doorbell chime may be stored and maintained in a memory of smart doorbell 302, for example, as an audio file. Alternatively, the doorbell chime may be retrieved from a remote source, such as IoT device(s) 304, 306, and/or 308 or system server(s) 126 (e.g., smart doorbell configuration component 128 of system server(s) 126). In an aspect in which smart doorbell 302 is connected to the AC power source of the premise at which it is installed, a doorbell chime unit installed at the premise that is also coupled to the wire(s) used to wire smart doorbell 302 to the AC power source may be activated upon activation of user input interface element(s) 314.

In some aspects, one or more commands may be transmitted to IoT device(s) 304, 306, and/or 308 upon activation of user input interface element(s) 314. Such commands may be included in MAC frames that are transmitted via wireless interface(s) 322 and received by smart doorbell command module 218 of such IoT devices. The MAC frames may be generated by frame generator 318. Examples of such commands may include a command to activate one or more smart indoor video camera(s) and/or one or more smart outdoor video camera(s) and that causes such smart camera(s) to provide a video stream, or a command to a mobile device that causes the mobile device to display an application notification (e.g., a home security application notification or smart doorbell application notification) that a person is at the user's door. In another example, such commands may include a command (e.g., a toggle command) to a smart display device that causes the smart display device (e.g., a smart television, a smart monitor, etc.) to power on, playback a doorbell chime via a speaker associated therewith, and/or cause the video stream(s) provided by the smart camera(s) to be displayed by the smart display device. For example, the commands may include a command to switch to a video input to which a streaming device is coupled. The streaming device may comprise an application that receives video stream(s) from the smart camera(s) and displays such video stream(s) via the smart display device. Alternatively, the application may execute on the smart display device itself. In such a scenario, the command may cause the smart display device to launch the application. In a further example, such commands may include a command to one or more smart speakers, which causes such smart speaker(s) to power on and/or playback a doorbell chime. In an aspect in which the doorbell chime is stored in a memory of smart doorbell 302, the doorbell chime to be played back may be transmitted to the intended smart device via a MAC frame.

Frame generator 318 may be configured to generate various types of MAC frames. For example, frame generator 318 may be configured to generate beacon MAC frames (also referred herein as beacons or beacon signals). Each beacon signal may be generated periodically or may be generated in response to a particular event (e.g., a change in power state or operation of smart doorbell 302). The beacon signal may uniquely identify smart doorbell 302 (e.g., via a unique MAC address assigned thereto) and may be broadcasted to a plurality of other IoT devices (e.g., IoT devices 304, 306, and/or 308) and/or WAP 310. The beacon signal may be utilized by IoT devices (e.g., IoT device 304, 306, and/or 308) and/or WAP 310 to discover smart doorbell 302 and/or to determine whether smart doorbell 302 is operating. The payload of the beacon signal may also comprise data that indicates one or more particular states (e.g., a power state, an operational state, etc.) of smart doorbell 302, one or more wireless communication protocols supported thereby, an indication of a power source utilized thereby (e.g., whether smart doorbell 302 is battery-powered or powered via a wired power source (e.g., an AC power source), etc.

Another type of MAC frame that may be generated by frame generator 318 is a group broadcast MAC frame. A group broadcast MAC frame may be configured to simultaneously deliver commands and/or any other types of data to a group of IoT devices (e.g., IoT devices 304, 306, and/or 308). Such a MAC frame may specify a group MAC address corresponding to a plurality of IoT devices included in the group.

A further type of MAC frame that may be generated by frame generator 318 is a unicast MAC frame. A unicast MAC frame may reliably delivered to a specific destination MAC address. Such frames may be acknowledged by a receiving device via a PHY-ACK protocol. Such a MAC frame may specify a MAC address that uniquely identifies the single device (e.g., one of IoT device 304, 306 or 308 or WAP 310) for which the unicast MAC frame is intended. A unicast MAC may also be utilized to deliver commands and/or any other types of data to the destination IoT device.

Wireless interface(s) 322 comprise components suitable for enabling smart doorbell 302 to wirelessly communicate with other devices via a corresponding wireless protocol. For example, wireless interface(s) 322 may be configured to transmit and/or receive MAC frames, as described above. Wireless interface(s) 322 may include, for example and without limitation, one or more of: a Wi-Fi interface that enables smart doorbell 302 to wirelessly communicate with IoT device(s) 304, 306, and/or 308 and/or WAP 310 or other remote Wi-Fi-capable device according to one or more of the wireless network protocols based on the IEEE (Institute of Electrical and Electronics Engineers) 802.11 family of standards; a cellular interface that enables smart doorbell 302 to wirelessly communicate with remote devices via one or more cellular networks; a Bluetooth interface that enables smart doorbell 302 to engage in wireless communication with other Bluetooth-enabled devices (e.g., IoT device(s) 304, 306, and/or 308 and/or WAP 310); or a Zigbee interface that enables smart doorbell 302 to wirelessly communicate with other Zigbee-enabled devices (e.g., IoT device(s) 304, 306, and/or 308 and/or WAP 310).

Each of IoT devices 304, 306, and 308 may include similar components to those shown with respect to smart doorbell 302. Thus, for example, each of IoT devices 304, 306, and 308 may include a frame generator , an energy storage device, one or more wireless interfaces, among other components.

The smart doorbell 302 utilizes one or more rule(s) 324 to determine whether a doorbell chime should be played back upon activation of user input interface element(s) 314, select a particular doorbell chime from a plurality of doorbell chimes back upon activation of user input interface element(s) 314, and/or determine a number of times that a particular doorbell chime is to be played back. For example, rule(s) 324 may specify one or more time periods within which a doorbell chime may be activated. If user input interface element(s) 314 are activated within such time period(s), then a signal may be transmitted to activate the doorbell chime (e.g., via a speaker of smart doorbell 302 and/or a doorbell chime unit located at the premise) and/or various signal(s) (comprising command(s) may be transmitted to IoT device(s) 304, 306 and/or 308 to activate such device(s) to provide and/or display video stream(s), as described above. For example, a user may desire to not have the doorbell chime activate during certain times (e.g., during times in which the user is sleeping or is otherwise busy). Such rule(s) 324 may also specify a particular doorbell chime to be played back based on time. For instance, rule(s) 324 may specify that a first doorbell chime is to be played back during the day and that a second doorbell chime is to be played back during the evening. In another example, rule(s) 324 may specify that a certain doorbell chime is to played at a particular time of year (e.g., a holiday-themed doorbell chime to be played back during a particular holiday (e.g., Halloween, Christmas, etc.)). Rule(s) 324 specify a number of times that a doorbell chime is to be activated such that the doorbell chime is played back the number of times. In an example in which the doorbell chime is a two-tone sound (e.g., "ding-dong"), rule(s) 324 may specify the number of times that the two-tone sound is to be played back. In a further example, rule(s) 324 may also specify the duration for which a doorbell chime is to be played back. For instance, in an example in which the doorbell chime is a song, rule(s) 324 may specify a number of seconds of the song that is to be played back.

The rule(s) 324 are user-based, where the determination as to whether a doorbell chime should be played back upon activation of user input interface element(s) 314, the selection of a particular doorbell chime from a plurality of doorbell chimes back upon activation of user input interface element(s) 314, and/or the determination of a number of times that a particular doorbell chime is to be played back is based on the user activating user input interface element(s) 314. For example, if a first user activates user input interface element(s) 314, then a first doorbell chime may be played back. If a second user activates user input interface element(s) 314, then a second doorbell chime may be played back. If a third user activates user input interface element(s) 314, then no doorbell chime may be played back. If a fourth user activates user input interface element(s) 314, then a particular doorbell chime may be activated a particular number of times and/or played back for a particular duration. It is noted that rule(s) 324 may be both time-based and user-based.

To determine which user is at the door, a smart camera is utilized to obtain an image of the user's face and/or facial features of the user. The smart camera may be activated via a motion sensor coupled thereto that detects motion of the user. The image and/or facial features are provided to a facial recognition application, which detects the user and determines the identity of the user based on the image and/or facial features. The facial recognition application executes on another device (e.g., another IoT device or system server(s) 126 (e.g., smart doorbell configuration component 128 of system server(s) 126)). The smart camera provides the image and/or an indication of facial features to the other device and/or receives an indication of the detected or recognized user via network 118. The indication of the detected user is provided to smart doorbell 302 from the device that comprises the facial recognition application via network 118. Smart doorbell 302 utilizes the indication and rule(s) 324 to determine the detected user that activated user input interface element(s) 314 and determine whether a doorbell chime should be played back upon activation of user input interface element(s) 314, select a particular doorbell chime from a plurality of doorbell chimes back upon activation of user input interface element(s) 314, and/or determine a number of times that a particular doorbell chime is to be played back is based on the detected user.

In an embodiment, the user may specify rule(s) 324, for example, via a user interface of an application utilized to control and/or configure smart doorbell 302 (e.g., a home security application or a smart doorbell application). In another embodiment, machine learning-based techniques may be utilized to determine rule(s) 324. For instance, smart doorbell configuration component 128 may comprise a machine learning model that analyzes user behavior, such as when the user answers the door upon a visitor activating user input interface element(s) 314, whether the user answers the door when a particular visitor activates user input interface element(s) 314, whether the user configures different doorbell chimes at different periods of the day or year, etc. Such behavior may be determined via one or more IoT devices that monitor the user's behavior (e.g., a smart doorlock associated with the door for which smart doorbell 302 is installed, a smart security sensor, a smart motion detector, etc.). Based on such behavior, the machine learning model learns when a doorbell chime is to be activated and/or which doorbell chime is to be activated.

Rule(s) 324 may be maintained and stored in a memory of smart doorbell 302. Alternatively, the rule(s) 324 may be received and/or retrieved from a remote source, such as IoT device(s) 304, 306, and/or 308 or smart doorbell configuration component 128 of system server(s) 126.

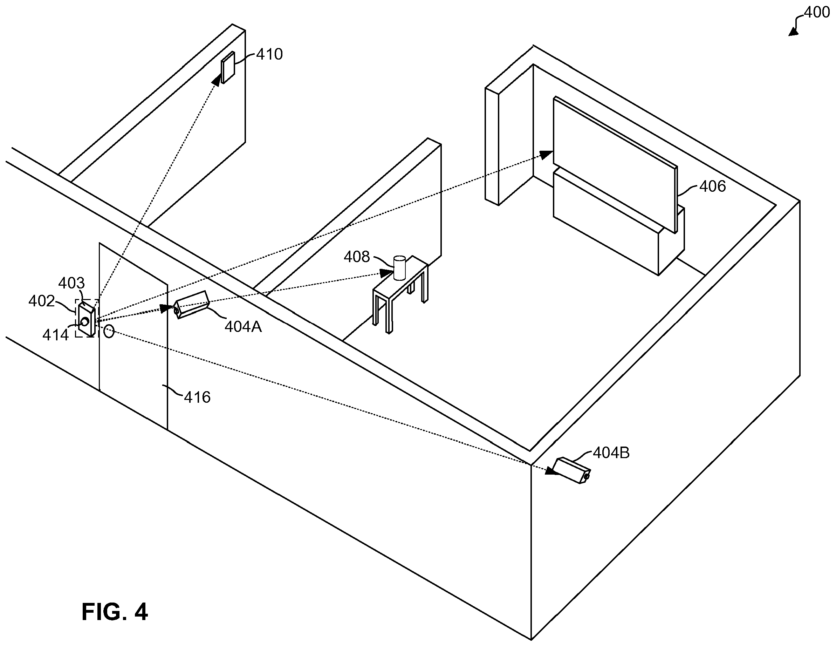

FIG. 4 is a diagram of an isometric view of a premise 400 at which a smart doorbell may be utilized, according to some embodiments. As shown in FIG. 4, premise 400 comprises a smart doorbell 402, a first smart camera 404A, a second smart camera 404B, a smart television 406, a smart speaker 408, and a wired doorbell chime unit 410. Smart doorbell 402 is an example of smart doorbell 302, as described above with reference to FIG. 3. First smart camera 404A, second smart camera 404B, smart television 406, and smart speaker 408 may be examples of IoT devices 304, 306, and 308, as described above with reference to FIG. 3. As shown in FIG. 4, premise 400 may comprise a house or other structure comprising a plurality of rooms. Smart doorbell 402 may comprise a press button 414, which is an example of user input interface element(s) 314, as described above with reference to FIG. 3. Smart doorbell 402 comprises a housing 403 in which a video camera is not included, thereby enabling smart doorbell 402 to have a relatively smaller form factor and also providing a user flexibility to mount a video camera in locations other than smart doorbell 402. For instance, as shown in FIG. 4, first smart camera 404A is mounted adjacently to one side of a door 416, while smart doorbell 402 is mounted adjacently to another side of door 416. In another example, second smart camera 404B is mounted on a different wall of premise 400 than the wall on which first smart camera 404A and smart doorbell 402 are mounted.

Upon activation of press button 414, smart doorbell 402 may cause one or more signals to be transmitted to one or more smart devices. For example, smart doorbell 402 may cause a power signal to be transmitted to wired doorbell chime unit 410, which causes wired doorbell chime unit 410 to play a doorbell chime. In such an example, both wired doorbell chime unit 410 and smart doorbell 402 may be coupled via one or more wires connected to a transformer coupled to a power supply of premise 400. In such an example, when press button 414 is activated, a switch (e.g., a relay or solid state switch) coupled to the transformer may be activated. The switch, when activated, completes the doorbell circuit comprising smart doorbell 402, the transformer, and wired doorbell chime unit 410, thereby enabling power to flow from the transformer to wired doorbell chime unit 410. Smart doorbell 402 may also transmit wireless signals to one or more of first smart camera 404A, second smart camera 404B, smart television 406, and smart speaker 408. For instance, smart doorbell 402 may transmit a wireless signal to first smart camera 404A and/or second smart camera 404B that causes first smart camera 404A and/or second smart camera 404B to activate and provide respective video streams to a display device (e.g., smart television 406) or a mobile device. Smart doorbell 402 may also transmit a wireless signal to smart television 406 that causes smart television 406 to power on and/or display the video stream(s). Smart doorbell 402 may also transmit a wireless signal to smart speaker 408 that causes smart speaker 408 to activate and/or playback a doorbell chime. In an embodiment, smart doorbell 402 may broadcast the same wireless signal (e.g., via a group broadcast MAC frame) to first smart camera 404A, second smart camera 404B, smart television 406, and/or smart speaker 408. In another embodiment, smart doorbell 402 may transmit a different wireless signal (e.g., via a unicast MAC frame) to each of first smart camera 404A, second smart camera 404B, smart television 406, and/or smart speaker 408. In a further embodiment, smart doorbell 402 may transmit a wireless signal intended for a particular smart device via another smart device that relays the wireless signal to the intended smart device. For example, to provide a wireless signal to smart television 406, smart doorbell 402 may transmit a wireless signal to smart speaker 408, and smart speaker 408 may relay the wireless signal to smart television 406.

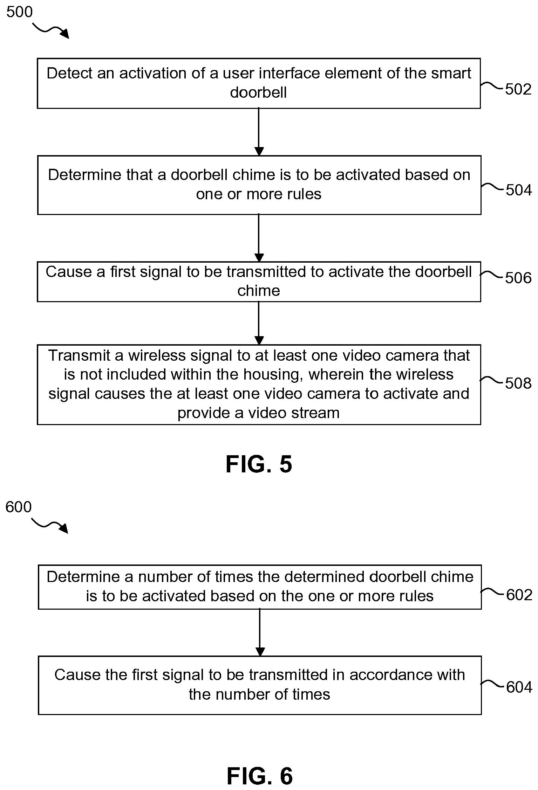

FIG. 5 is a flowchart for a method 500 performed by a smart doorbell, according to an embodiment. The smart doorbell comprises a housing. Method 500 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 5, as will be understood by a person of ordinary skill in the art.

Method 500 shall be described with reference to smart doorbell 302 of FIG. 3 and smart doorbell 402 of FIG. 4, which are two examples of a smart doorbell. However, method 500 is not limited to those example embodiments.

In 502, smart doorbell 302 detects an activation of a user interface element (via user input interface element(s) 314) of smart doorbell 302.

In response to detecting the activation of the user interface element, steps 504, 506, and 508 are performed. In 504, smart doorbell 302 determines that a doorbell chime is to be activated based on rule(s) 324. For example, as described herein, rule(s) 324 may specify a time period within which the doorbell chime may be activated. Smart doorbell 302 may determine that the doorbell chime is to be activated based on rule(s) 324 by determining that the activation of the user interface element of smart doorbell 302 is detected during the time period. In another example, as also described herein, smart doorbell 302 may determine that the doorbell chime is to be activated based on rule(s) 324 by selecting the doorbell chime from among a plurality of doorbell chimes based on rule(s) 324, wherein rule(s) 324 specify which doorbell chime from the plurality of doorbell chimes is to be activated based on a time period in which the user interface element of smart doorbell 302 is activated. In a further example, as further described herein, smart doorbell 302 may determine that the doorbell chime is to be activated based on rule(s) 324 by selecting the doorbell chime from among a plurality of doorbell chimes based on rule(s) 324, wherein rule(s) 324 specify which doorbell chime from the plurality of doorbell chimes is to be activated based on a user that activates the user interface element of smart doorbell 302.

In 506, smart doorbell 302 causes a first signal to be transmitted to activate the doorbell chime. For example, as shown in FIG. 4, causing the first signal to be transmitted to activate the doorbell chime comprises at least one of smart doorbell 402 causing the first signal to be transmitted to a doorbell chime speaker (e.g., wired doorbell chime unit 410) external to housing 403 via a wired connection (e.g., by completing the doorbell circuit), or smart doorbell 402 wirelessly transmitting the first signal to a wireless speaker (e.g., smart speaker 408) external to housing 403. The first signal may be transmitted wirelessly via wireless interface(s) 322, as described above with reference to FIG. 3.

In 508, smart doorbell 302 transmits a wireless signal to at least one video camera (e.g., IoT device(s) 304, 306, and/or 308) that is not included within the housing, wherein the wireless signal causes the at least one video camera to activate and provide a video stream. For example, with reference to FIG. 4, smart doorbell 402 may transmit a wireless signal to at least one of first smart camera 404A or second smart camera 404B that is not included within housing 403, wherein the wireless signal causes at least one of first smart camera 404A or second smart camera 404B to activate and provide a respective video stream.

In an embodiment, with reference to FIG. 4, smart doorbell 402 may further transmit a second wireless signal to a display device (e.g., smart television 406) external to housing 403 that causes the display device to perform at least one of transitioning itself to a powering on state or display the video stream (e.g., provided via first smart camera 404A and/or second smart camera 404B).

FIG. 6 is a flowchart for a method 600 for determining a number of times a doorbell chime is to be activated, according to an embodiment. Method 600 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 6, as will be understood by a person of ordinary skill in the art.

Method 600 shall be described with reference to smart doorbell 302 of FIG. 3 and smart doorbell 402 of FIG. 4, which are two examples of a smart doorbell. However, method 600 is not limited to those example embodiments.

In 602, smart doorbell 302 determines a number of times the determined doorbell chime is to be activated based on rule(s) 324.

In 604, smart doorbell 302 causes the first signal to be transmitted in accordance with the number of times. For example, with reference to FIG. 4, smart doorbell 402 causes the first signal to be transmitted to wired doorbell chime unit 410 in accordance with the number of times (e.g., by repeatedly completing the doorbell circuit in accordance with the number of times), or smart doorbell 402 may wirelessly transmit the first signal to a wireless speaker (e.g., smart speaker 408) in accordance with the number of times.

### Example Computer System

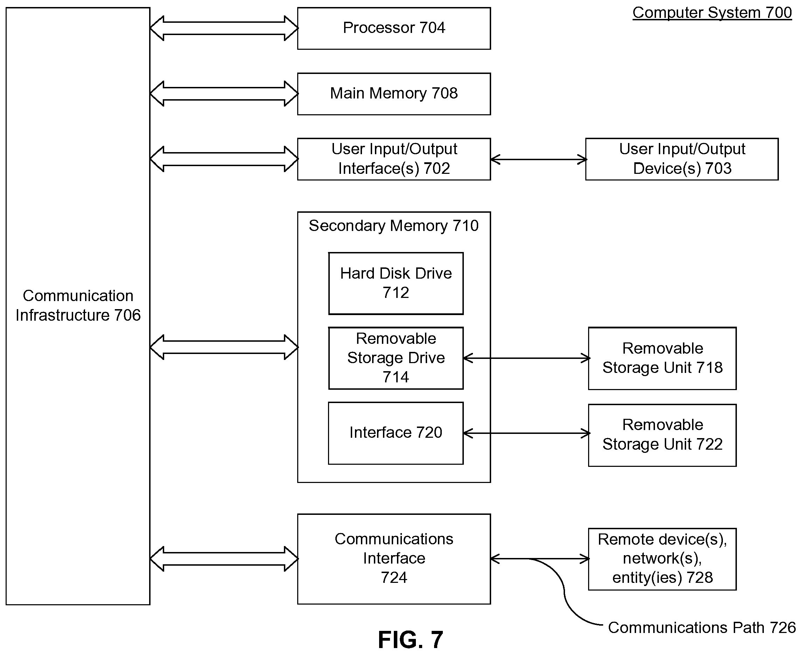

Various embodiments may be implemented, for example, using one or more well-known computer systems, such as computer system 700 shown in FIG. 7. For example, one or more of media device 106, remote control 110, content server(s) 120, system server(s) 126, smart doorbell configuration component 128, smart doorbell command module 218, smart doorbell 302, IoT devices 304, 306, and 308, WAP 310, user input interface element(s) 314, output device(s) 316, frame generator 318, energy storage device 320, wireless interface(s) 322, rule(s) 324, smart doorbell 402, first smart camera 402A, second smart camera 402B, smart television 406, and smart speaker 408, may be implemented using combinations or sub-combinations of computer system 700. Also or alternatively, one or more computer systems 700 may be used, for example, to implement any of the embodiments discussed herein, as well as combinations and sub-combinations thereof.

Computer system 700 may include one or more processors (also called central processing units, or CPUs), such as a processor 704. Processor 704 may be connected to a communication infrastructure or bus 706.

Computer system 700 may also include user input/output device(s) 703, such as monitors, keyboards, pointing devices, etc., which may communicate with communication infrastructure 706 through user input/output interface(s) 702.

One or more of processors 704 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 700 may also include a main or primary memory 708, such as random access memory (RAM). Main memory 708 may include one or more levels of cache. Main memory 708 may have stored therein control logic (i.e., computer software) and/or data.

Computer system 700 may also include one or more secondary storage devices or memory 710. Secondary memory 710 may include, for example, a hard disk drive 712 and/or a removable storage device or drive 714. Removable storage drive 714 may be a floppy disk drive, a magnetic tape drive, a compact disk drive, an optical storage device, tape backup device, and/or any other storage device/drive.

Removable storage drive 714 may interact with a removable storage unit 718. Removable storage unit 718 may include a computer usable or readable storage device having stored thereon computer software (control logic) and/or data. Removable storage unit 718 may be a floppy disk, magnetic tape, compact disk, DVD, optical storage disk, and/ any other computer data storage device. Removable storage drive 714 may read from and/or write to removable storage unit 718.

Secondary memory 710 may include other means, devices, components, instrumentalities or other approaches for allowing computer programs and/or other instructions and/or data to be accessed by computer system 700. Such means, devices, components, instrumentalities or other approaches may include, for example, a removable storage unit 722 and an interface 720. Examples of the removable storage unit 722 and the interface 720 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 700 may further include a communication or network interface 724. Communication interface 724 may enable computer system 700 to communicate and interact with any combination of external devices, external networks, external entities, etc. (individually and collectively referenced by reference number 728). For example, communication interface 724 may allow computer system 700 to communicate with external or remote devices 728 over communications path 726, which may be wired and/or wireless (or a combination thereof), and which may include any combination of LANs, WANs, the Internet, etc. Control logic and/or data may be transmitted to and from computer system 700 via communication path 726.

Computer system 700 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 700 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 700 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 700, main memory 708, secondary memory 710, and removable storage units 718 and 722, as well as tangible articles of manufacture embodying any combination of the foregoing. Such control logic, when executed by one or more data processing devices (such as computer system 700 or processor(s) 704), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 7. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, within the scope of the appended claims. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims.

## Claims

1. A computer-implemented method (500) performed by a system comprising a smart doorbell (302, 402) comprising a housing (403), at least one video camera; and a device executing a facial recognition application, the computer-implemented method (500) comprising:
detecting (502), by the smart doorbell (302, 402), an activation of a user interface element of the smart doorbell (302, 402); and
in response to detecting the activation of the user interface element:
determining (504), by the smart doorbell (302, 402), that a doorbell chime is to be activated based on one or more rules;
causing (506), by the smart doorbell (302, 402), a first signal to be transmitted to activate the doorbell chime; and
transmitting (508), by the smart doorbell (302, 402), a wireless signal to the at least one video camera that is not included within the housing (402), wherein the wireless signal causes the at least one video camera to activate and provide a video stream;
wherein the computer-implemented method further comprises:
obtaining, by the at least one video camera, an image of a face or facial features of a user that activates the user interface element of the smart doorbell (302, 402);
transmitting, by the at least one video camera via a network, the image to the device;
detecting, by the device using the facial recognition application, the user based on the image;
transmitting, by the device via the network, an indication of the detected user to the smart doorbell (302, 402);
receiving, by the smart doorbell (302, 402) from the device via the network, the indication of the user;
determining, by the smart doorbell (302, 402), a number of times the determined doorbell chime is to be activated based on the one or more rules, wherein the one or more rules specify the number of times the determined doorbell chime is to be activated based on the indication of the user, wherein causing the first signal to be transmitted to activate the doorbell chime comprises:
causing, by the smart doorbell (302, 402), the first signal to be transmitted in accordance with the number of times.

2. The computer-implemented method of claim **1,** wherein the one or more rules specify a time period within which the doorbell chime may be activated, and wherein determining that the doorbell chime is to be activated based on the one or more rules comprises:
determining, by the smart doorbell (302, 402), that the activation of the user interface element of the smart doorbell (302, 402) is detected during the time period.

3. The computer-implemented method of claim **1,** wherein determining that the doorbell chime is to be activated based on the one or more rules comprises:
selecting, by the smart doorbell (302, 402), the doorbell chime from among a plurality of doorbell chimes based on the one or more rules, wherein the one or more rules specify which doorbell chime from the plurality of doorbell chimes is to be activated based on a time period in which the user interface element of the smart doorbell (302, 402) is activated.

4. The computer-implemented method of claim **1,** wherein determining that the doorbell chime is to be activated based on the one or more rules comprises:
selecting, by the smart doorbell (302, 402), the doorbell chime from among a plurality of doorbell chimes based on the one or more rules, wherein the one or more rules specify which doorbell chime from the plurality of doorbell chimes is to be activated based on the user that activates the user interface element of the smart doorbell (302, 402).

5. The computer-implemented method of claim **1,** wherein causing the first signal to be transmitted to activate the doorbell chime comprises at least one of:
causing, by the smart doorbell (302, 402), the first signal to be transmitted to a doorbell chime speaker external to the housing (403) via a wired connection; or
wirelessly transmitting, by the smart doorbell (302, 402), the first signal to a wireless speaker external to the housing (403).

6. The computer-implemented method of claim **1,** further comprising:
transmitting, by the smart doorbell (302, 402), a second wireless signal to a display device external to the housing (403) that causes the display device to perform at least one of:
transitioning itself to a power on state; or
displaying the video stream.

7. A system, comprising:
a smart doorbell;
at least one video camera;
a device executing a facial recognition application;
one or more memories; and
at least one processor each coupled to at least one of the one or more memories and configured to perform operations comprising:
detecting, by the smart doorbell (302, 402), an activation of a user interface element of a smart doorbell (302, 402); and
in response to detecting the activation of the user interface element:
determining, by the smart doorbell (302, 402), that a doorbell chime is to be activated based on one or more rules;
causing, by the smart doorbell (302, 402), a first signal to be transmitted to activate the doorbell chime; and
transmitting, by the smart doorbell (302, 402), a wireless signal to at least one video camera that is not included within a housing (402) of the smart doorbell (302, 402), wherein the wireless signal causes the at least one video camera to activate and provide a video stream;
wherein the operations further comprise:
obtaining, by the at least one video camera, an image of a face or facial features of a user that activates the user interface element of the smart doorbell (302, 402);
transmitting, by the at least one video camera via a network, the image to the device;
detecting, by the device using the facial recognition application, the user based on the image;
transmitting, by the device via the network, an indication of the detected user to the smart doorbell (302, 402);
receiving, by the smart doorbell (302, 402) from the device via the network, the indication of the user;
determining, by the smart doorbell (302, 402), a number of times the determined doorbell chime is to be activated based on the one or more rules, wherein the one or more rules specify the number of times the determined doorbell chime is to be activated based on a user that activates the user interface element of the smart doorbell (302, 402), wherein causing the first signal to be transmitted to activate the doorbell chime comprises:
causing, by the smart doorbell (302, 402), the first signal to be transmitted in accordance with the number of times.

8. The system of claim 7, wherein the one or more rules specify a time period within which the doorbell chime may be activated, and wherein determining that the doorbell chime is to be activated based on the one or more rules comprises:
determining, by the smart doorbell (302, 402), that the activation of the user interface element of the smart doorbell (302, 402) is detected during the time period.

9. The system of claim 7, wherein determining that the doorbell chime is to be activated based on the one or more rules comprises:
selecting, by the smart doorbell (302, 402), the doorbell chime from among a plurality of doorbell chimes based on the one or more rules, wherein the one or more rules specify which doorbell chime from the plurality of doorbell chimes is to be activated based on a time period in which the user interface element of the smart doorbell (302, 402) is activated.

10. The system of claim 7, wherein:
determining that the doorbell chime is to be activated based on the one or more rules comprises selecting, by the smart doorbell (302, 402), the doorbell chime from among a plurality of doorbell chimes based on the one or more rules, wherein the one or more rules specify which doorbell chime from the plurality of doorbell chimes is to be activated based on the user that activates the user interface element of the smart doorbell (302, 402); and/or
causing the first signal to be transmitted to activate the doorbell chime comprises at least one of:
causing, by the smart doorbell (302, 402), the first signal to be transmitted to a doorbell chime speaker external to the housing via a wired connection; or
wirelessly transmitting, by the smart doorbell (302, 402), the first signal to a wireless speaker external to the housing (403).

11. The system of claim 7, the operations further comprising:
transmitting, by the smart doorbell (302, 402), a second wireless signal to a display device external to the housing that causes the display device to perform at least one of:
transitioning itself to a power on state; or
displaying the video stream.

12. A non-transitory computer-readable medium having instructions stored thereon that, when executed by a system comprising a smart doorbell (302, 402) comprising a housing (403), at least one video camera, and a device executing a facial recognition application, cause the system to perform operations comprising:
detecting, by the smart doorbell (302, 402), an activation of a user interface element of a smart doorbell; and
in response to detecting the activation of the user interface element:
determining, by the smart doorbell (302, 402), that a doorbell chime is to be activated based on one or more rules;
causing, by the smart doorbell (302, 402), a first signal to be transmitted to activate the doorbell chime; and
transmitting, by the smart doorbell (302, 402), a wireless signal to at least one video camera that is not included within a housing of the smart doorbell, wherein the wireless signal causes the at least one video camera to activate and provide a video stream;
wherein the operations further comprise:
obtaining, by the at least one video camera, an image of a face or facial features of a user that activates the user interface element of the smart doorbell (302, 402);
transmitting, by the at least one video camera via a network, the image to the device;
detecting, by the device using the facial recognition application, the user based on the image;
transmitting, by the device via the network, an indication of the detected user to the smart doorbell (302, 402);
receiving, by the smart doorbell (302, 402) from the device via the network, the indication of the user;
determining, by the smart doorbell (302, 402), a number of times the determined doorbell chime is to be activated based on the one or more rules, wherein the one or more rules specify the number of times the determined doorbell chime is to be activated based on a user that activates the user interface element of the smart doorbell (302, 402), wherein causing the first signal to be transmitted to activate the doorbell chime comprises:
causing, by the smart doorbell (302, 402), the first signal to be transmitted in accordance with the number of times.

13. The non-transitory computer-readable medium of claim 12, wherein the one or more rules specify a time period within which the doorbell chime may be activated, and wherein determining that the doorbell chime is to be activated based on the one or more rules comprises:
determining, by the smart doorbell (302, 402), that the activation of the user interface element of the smart doorbell is detected during the time period.

14. The non-transitory computer-readable medium of claim 12, wherein determining that the doorbell chime is to be activated based on the one or more rules comprises:
selecting, by the smart doorbell (302, 402), the doorbell chime from among a plurality of doorbell chimes based on the one or more rules, wherein the one or more rules specify which doorbell chime from the plurality of doorbell chimes is to be activated based on a time period in which the user interface element of the smart doorbell is activated.

15. The non-transitory computer-readable medium of claim 12, wherein:
determining that the doorbell chime is to be activated based on the one or more rules comprises selecting, by the smart doorbell (302, 402), the doorbell chime from among a plurality of doorbell chimes based on the one or more rules, wherein the one or more rules specify which doorbell chime from the plurality of doorbell chimes is to be activated based on the user that activates the user interface element of the smart doorbell; and/or
causing the first signal to be transmitted to activate the doorbell chime comprises at least one of:
causing, by the smart doorbell (302, 402), the first signal to be transmitted to a doorbell chime speaker external to the housing via a wired connection; or
wirelessly transmitting, by the smart doorbell (302, 402), the first signal to a wireless speaker external to the housing.

## Patentansprüche

1. Computerimplementiertes Verfahren (500), das durch ein System durchgeführt wird, welches eine intelligente Türklingel (302, 402) umfasst, umfassend ein Gehäuse (403), zumindest eine Videokamera und eine Vorrichtung, die eine Gesichtserkennungsanwendung ausführt, wobei das computerimplementierte Verfahren (500) Folgendes umfasst:
durch die intelligente Türklingel (302, 402) Detektieren (502) einer Aktivierung eines Benutzerschnittstellenelements der intelligenten Türklingel (302, 402); und
als Reaktion auf das Detektieren der Aktivierung des Benutzerschnittstellenelements:
durch die intelligente Türklingel (302, 402) Bestimmen (504), dass ein Türklingelton zu aktivieren ist, basierend auf einer oder mehreren Regeln,
durch die intelligente Türklingel (302, 402) Bewirken (506), dass ein erstes Signal übertragen wird, um den Türklingelton zu aktivieren; und
durch die intelligente Türklingel (302, 402) Übertragen (508) eines Drahtlossignals an die zumindest eine Videokamera, die nicht in dem Gehäuse (402) umfasst ist, wobei das Drahtlossignal bewirkt, dass die zumindest eine Videokamera einen Videostream aktiviert und bereitstellt;
wobei das computerimplementierte Verfahren ferner Folgendes umfasst:
durch die zumindest eine Videokamera Erhalten eines Bilds eines Gesichts oder von Gesichtsmerkmalen eines Benutzers, welcher das Benutzerschnittstellenelement der intelligenten Türklingel (302, 402) aktiviert;
durch die zumindest eine Videokamera über ein Netzwerk Übertragen des Bilds an die Vorrichtung;
durch die Vorrichtung unter Verwendung der Gesichtserkennungsanwendung Detektieren des Benutzers basierend auf dem Bild;
durch die Vorrichtung über das Netzwerk Übertragen einer Angabe des detektierten Benutzers an die intelligente Türklingel (302, 402);
durch die intelligente Türklingel (302, 402) Empfangen der Angabe des Benutzers von der Vorrichtung über das Netzwerk;
durch die intelligente Türklingel (302, 402) Bestimmen einer Anzahl von Malen, welche der bestimmte Türklingelton zu aktivieren ist, basierend auf der einen oder den mehreren Regeln, wobei die eine oder die mehreren Regeln die Anzahl von Malen, welche der bestimmte Türklingelton zu aktivieren ist, basierend auf der Angabe des Benutzers spezifizieren, wobei das Bewirken, dass das erste Signal übertragen wird, um den Türklingelton zu aktivieren, Folgendes umfasst:
durch die intelligente Türklingel (302, 402) Bewirken, dass das erste Signal entsprechend der Anzahl von Malen übertragen wird.

2. Computerimplementiertes Verfahren nach Anspruch 1, wobei die eine oder die mehreren Regeln einen Zeitraum spezifizieren, in dem der Türklingelton aktiviert werden kann, und wobei das Bestimmen, dass der Türklingelton zu aktivieren ist, basierend auf der einen oder den mehreren Regeln Folgendes umfasst:
durch die intelligente Türklingel (302, 402) Bestimmen, dass die Aktivierung des Benutzerschnittstellenelements der intelligenten Türklingel (302, 402) während des Zeitraums detektiert wird.

3. Computerimplementiertes Verfahren nach Anspruch 1, wobei das Bestimmen, dass der Türklingelton zu aktivieren ist, basierend auf der einen oder den mehreren Regeln Folgendes umfasst:
durch die intelligente Türklingel (302, 402) Auswählen des Türklingeltons aus einer Vielzahl von Türklingeltönen basierend auf der einen oder den mehreren Regeln, wobei die eine oder mehreren Regeln basierend auf einem Zeitraum, in dem das Benutzerschnittstellenelement der intelligenten Türklingel (302, 402) aktiviert ist, spezifizieren, welcher Türklingelton aus der Vielzahl von Türklingeltönen zu aktivieren ist.

4. Computerimplementiertes Verfahren nach Anspruch 1, wobei das Bestimmen, dass der Türklingelton zu aktivieren ist, basierend auf der einen oder den mehreren Regeln Folgendes umfasst:
durch die intelligente Türklingel (302, 402) Auswählen des Türklingeltons aus einer Vielzahl von Türklingeltönen basierend auf der einen oder den mehreren Regeln, wobei die eine oder mehreren Regeln basierend auf dem Benutzer, welcher das Benutzerschnittstellenelement der intelligenten Türklingel (302, 402) aktiviert, spezifizieren, welcher Türklingelton aus der Vielzahl von Türklingeltönen zu aktivieren ist.

5. Computerimplementiertes Verfahren nach Anspruch 1, wobei das Bewirken, dass das erste Signal übertragen wird, um den Türklingelton zu aktivieren, zumindest eines aus folgenden umfasst:
durch die intelligente Türklingel (302, 402) Bewirken, dass das erste Signal über eine drahtgebundene Verbindung an einen Türklingellautsprecher außerhalb des Gehäuses (403) übertragen wird; oder
durch die intelligente Türklingel (302, 402) drahtloses Übertragen des ersten Signals an einen drahtlosen Lautsprecher außerhalb des Gehäuses (403).

6. Computerimplementiertes Verfahren nach Anspruch 1, ferner umfassend:
durch die intelligente Türklingel (302, 402) Übertragen eines zweiten Drahtlossignals an eine Anzeigevorrichtung außerhalb des Gehäuses (403), welches bewirkt, dass die Anzeigevorrichtung zumindest eines aus folgenden durchführt:
Wechseln in einen Einschaltzustand; oder
Anzeigen des Videostreams.

7. System, umfassend:
eine intelligente Türklingel;
zumindest eine Videokamera;
eine Vorrichtung, die eine Gesichtserkennungsanwendung ausführt:
einen oder mehrere Speicher; und
zumindest einen Prozessor, jeweils gekoppelt an zumindest einen aus dem einen oder den mehreren Speichern und dazu ausgelegt, Operationen durchzuführen, die Folgendes umfassen:
durch die intelligente Türklingel (302, 402) Detektieren einer Aktivierung eines Benutzerschnittstellenelements einer intelligenten Türklingel (302, 402); und
als Reaktion auf das Detektieren der Aktivierung des Benutzerschnittstellenelements:
durch die intelligente Türklingel (302, 402) Bestimmen, dass ein Türklingelton zu aktivieren ist, basierend auf einer oder mehreren Regeln,
durch die intelligente Türklingel (302, 402) Bewirken, dass ein erstes Signal übertragen wird, um den Türklingelton zu aktivieren; und
durch die intelligente Türklingel (302, 402) Übertragen eines Drahtlossignals an die zumindest eine Videokamera, die nicht in einem Gehäuse (402) der intelligenten Türklingel (302, 402) umfasst ist, wobei das Drahtlossignal bewirkt, dass die zumindest eine Videokamera einen Videostream aktiviert und bereitstellt;
wobei die Operationen ferner Folgendes umfassen:
durch die zumindest eine Videokamera Erhalten eines Bilds eines Gesichts oder von Gesichtsmerkmalen eines Benutzers, welcher das Benutzerschnittstellenelement der intelligenten Türklingel (302, 402) aktiviert;
durch die zumindest eine Videokamera über ein Netzwerk Übertragen des Bilds an die Vorrichtung;
durch die Vorrichtung unter Verwendung der Gesichtserkennungsanwendung Detektieren des Benutzers basierend auf dem Bild;
durch die Vorrichtung über das Netzwerk Übertragen einer Angabe des detektierten Benutzers an die intelligente Türklingel (302, 402);
durch die intelligente Türklingel (302, 402) Empfangen der Angabe des Benutzers von der Vorrichtung über das Netzwerk;
durch die intelligente Türklingel (302, 402) Bestimmen einer Anzahl von Malen, welche der bestimmte Türklingelton zu aktivieren ist, basierend auf der einen oder den mehreren Regeln, wobei die eine oder die mehreren Regeln die Anzahl von Malen, welche der bestimmte Türklingelton zu aktivieren ist, basierend auf einem Benutzer spezifizieren, welcher das Benutzerschnittstellenelement der intelligenten Türklingel (302, 402) aktiviert, wobei das Bewirken, dass das erste Signal übertragen wird, um den Türklingelton zu aktivieren, Folgendes umfasst:
durch die intelligente Türklingel (302, 402) Bewirken, dass das erste Signal entsprechend der Anzahl von Malen übertragen wird.

8. System nach Anspruch 7, wobei die eine oder die mehreren Regeln einen Zeitraum spezifizieren, in dem der Türklingelton aktiviert werden kann, und wobei das Bestimmen, dass der Türklingelton zu aktivieren ist, basierend auf der einen oder den mehreren Regeln Folgendes umfasst:
durch die intelligente Türklingel (302, 402) Bestimmen, dass die Aktivierung des Benutzerschnittstellenelements der intelligenten Türklingel (302, 402) während des Zeitraums detektiert wird.

9. System nach Anspruch 7, wobei das Bestimmen, dass der Türklingelton zu aktivieren ist, basierend auf der einen oder den mehreren Regeln Folgendes umfasst:
durch die intelligente Türklingel (302, 402) Auswählen des Türklingeltons aus einer Vielzahl von Türklingeltönen basierend auf der einen oder den mehreren Regeln, wobei die eine oder mehreren Regeln basierend auf einem Zeitraum, in dem das Benutzerschnittstellenelement der intelligenten Türklingel (302, 402) aktiviert ist, spezifizieren, welcher Türklingelton aus der Vielzahl von Türklingeltönen zu aktivieren ist.

10. System nach Anspruch 7, wobei:
das Bestimmen, dass der Türklingelton zu aktivieren ist, basierend auf der einen oder den mehreren Regeln Folgendes umfasst: durch die intelligente Türklingel (302, 402) Auswählen des Türklingeltons aus einer Vielzahl von Türklingeltönen basierend auf der einen oder den mehreren Regeln, wobei die eine oder mehreren Regeln basierend auf dem Benutzer, welcher das Benutzerschnittstellenelement der intelligenten Türklingel (302, 402) aktiviert, spezifizieren, welcher Türklingelton aus der Vielzahl von Türklingeltönen zu aktivieren ist; und/oder
wobei das Bewirken, dass das erste Signal übertragen wird, um den Türklingelton zu aktivieren, zumindest eines aus folgenden umfasst:
durch die intelligente Türklingel (302, 402) Bewirken, dass das erste Signal über eine drahtgebundene Verbindung an einen Türklingellautsprecher außerhalb des Gehäuses übertragen wird; oder
durch die intelligente Türklingel (302, 402) drahtloses Übertragen des ersten Signals an einen drahtlosen Lautsprecher außerhalb des Gehäuses (403).

11. System nach Anspruch 7, wobei die Operationen ferner Folgendes umfassen:
durch die intelligente Türklingel (302, 402) Übertragen eines zweiten Drahtlossignals an eine Anzeigevorrichtung außerhalb des Gehäuses, welches bewirkt, dass die Anzeigevorrichtung zumindest eines aus folgenden durchführt:
Wechseln in einen Einschalt-Zustand; oder
Anzeigen des Videostreams.

12. Nichtflüchtiges computerlesbares Medium, auf dem Befehle gespeichert sind, die, wenn sie durch ein System durchgeführt werden, welches eine intelligente Türklingel (302, 402) umfasst, umfassend ein Gehäuse (403), zumindest eine Videokamera und eine Vorrichtung, die eine Gesichtserkennungsanwendung ausführt, bewirkt, dass das System Vorgänge durchführt, die Folgendes umfassen:
durch die intelligente Türklingel (302, 402) Detektieren einer Aktivierung eines Benutzerschnittstellenelements einer intelligenten Türklingel; und
als Antwort auf das Detektieren der Aktivierung des Benutzerschnittstellenelements:
durch die intelligente Türklingel (302, 402) Bestimmen, dass ein Türklingelton zu aktivieren ist, basierend auf einer oder mehreren Regeln,
durch die intelligente Türklingel (302, 402) Bewirken, dass ein erstes Signal übertragen wird, um den Türklingelton zu aktivieren; und
durch die intelligente Türklingel (302, 402) Übertragen eines Drahtlossignals an die zumindest eine Videokamera, die nicht in einem Gehäuse der intelligenten Türklingel (302, 402) umfasst ist, wobei das Drahtlossignal bewirkt, dass die zumindest eine Videokamera einen Videostream aktiviert und bereitstellt;
wobei die Operationen ferner Folgendes umfassen:
durch die zumindest eine Videokamera Erhalten eines Bilds eines Gesichts oder von Gesichtsmerkmalen eines Benutzers, welcher das Benutzerschnittstellenelement der intelligenten Türklingel (302, 402) aktiviert;
durch die zumindest eine Videokamera über ein Netzwerk Übertragen des Bilds an die Vorrichtung;
durch die Vorrichtung unter Verwendung der Gesichtserkennungsanwendung Detektieren des Benutzers basierend auf dem Bild;
durch die Vorrichtung über das Netzwerk Übertragen einer Angabe des detektierten Benutzers an die intelligente Türklingel (302, 402);
durch die intelligente Türklingel (302, 402) Empfangen der Angabe des Benutzers von der Vorrichtung über das Netzwerk;
durch die intelligente Türklingel (302, 402) Bestimmen einer Anzahl von Malen, welche der bestimmte Türklingelton zu aktivieren ist, basierend auf der einen oder den mehreren Regeln, wobei die eine oder die mehreren Regeln die Anzahl von Malen, welche der bestimmte Türklingelton zu aktivieren ist, basierend auf einem Benutzer spezifizieren, welcher das Benutzerschnittstellenelement der intelligenten Türklingel (302, 402) aktiviert, wobei das Bewirken, dass das erste Signal übertragen wird, um den Türklingelton zu aktivieren, Folgendes umfasst:
durch die intelligente Türklingel (302, 402) Bewirken, dass das erste Signal entsprechend der Anzahl von Malen übertragen wird.

13. Nichtflüchtiges computerlesbares Medium nach Anspruch 12, wobei die eine oder die mehreren Regeln einen Zeitraum spezifizieren, in dem der Türklingelton aktiviert werden kann, und wobei das Bestimmen, dass der Türklingelton zu aktivieren ist, basierend auf der einen oder den mehreren Regeln Folgendes umfasst:
durch die intelligente Türklingel (302, 402) Bestimmen, dass die Aktivierung des Benutzerschnittstellenelements der intelligenten Türklingel während des Zeitraums detektiert wird.

14. Nichtflüchtiges computerlesbares Medium nach Anspruch 12, wobei das Bestimmen, dass der Türklingelton zu aktivieren ist, basierend auf der einen oder den mehreren Regeln Folgendes umfasst:
durch die intelligente Türklingel (302, 402) Auswählen des Türklingeltons aus einer Vielzahl von Türklingeltönen basierend auf der einen oder den mehreren Regeln, wobei die eine oder mehreren Regeln basierend auf einem Zeitraum, in dem das Benutzerschnittstellenelement der intelligenten Türklingel aktiviert ist, spezifizieren, welcher Türklingelton aus der Vielzahl von Türklingeltönen zu aktivieren ist.

15. Nichtflüchtiges computerlesbares Medium nach Anspruch 12, wobei:
das Bestimmen, dass der Türklingelton zu aktivieren ist, basierend auf der einen oder den mehreren Regeln Folgendes umfasst: durch die intelligente Türklingel (302, 402) Auswählen des Türklingeltons aus einer Vielzahl von Türklingeltönen basierend auf der einen oder den mehreren Regeln, wobei die eine oder mehreren Regeln basierend auf dem Benutzer, welcher das Benutzerschnittstellenelement der intelligenten Türklingel aktiviert, spezifizieren, welcher Türklingelton aus der Vielzahl von Türklingeltönen zu aktivieren ist; und/oder
wobei das Bewirken, dass das erste Signal übertragen wird, um den Türklingelton zu aktivieren, zumindest eines aus folgenden umfasst:
durch die intelligente Türklingel (302, 402) Bewirken, dass das erste Signal über eine drahtgebundene Verbindung an einen Türklingellautsprecher außerhalb des Gehäuses übertragen wird; oder
durch die intelligente Türklingel (302, 402) drahtloses Übertragen des ersten Signals an einen drahtlosen Lautsprecher außerhalb des Gehäuses.

## Revendications

1. Procédé mis en œuvre par ordinateur (500) exécuté par un système comprenant une sonnette intelligente (302, 402) comprenant un boîtier (403), au moins une caméra vidéo ; et un dispositif exécutant une application de reconnaissance faciale, le procédé mis en œuvre par ordinateur (500) comprenant les étapes consistant à :
détecter (502), par l'intermédiaire de la sonnette intelligente (302, 402), une activation d'un élément d'interface utilisateur de la sonnette intelligente (302, 402) ; et
en réponse à la détection de l'activation de l'élément d'interface utilisateur :
déterminer (504), par l'intermédiaire de la sonnette intelligente (302, 402), qu'un carillon de sonnette doit être activé sur la base d'une ou plusieurs règles ;
amener (506), par l'intermédiaire de la sonnette intelligente (302, 402), un premier signal à être transmis pour activer le carillon de sonnette ; et
transmettre (508), par l'intermédiaire de la sonnette intelligente (302, 402), un signal sans fil à la au moins une caméra vidéo qui n'est pas incluse dans le boîtier (402), dans lequel le signal sans fil amène la au moins une caméra vidéo à s'activer et à fournir un flux vidéo ;
dans lequel le procédé mis en œuvre par ordinateur comprend en outre les étapes consistant à :
obtenir, par l'intermédiaire de la au moins une caméra vidéo, une image d'un visage ou de caractéristiques faciales d'un utilisateur qui active l'élément d'interface utilisateur de la sonnette intelligente (302, 402) ;
transmettre, par l'intermédiaire de la au moins une caméra vidéo via un réseau, l'image au dispositif ;
détecter, par l'intermédiaire du dispositif utilisant l'application de reconnaissance faciale, l'utilisateur sur la base de l'image ;
transmettre, par l'intermédiaire du dispositif via le réseau, une indication de l'utilisateur détecté à la sonnette intelligente (302, 402) ;
recevoir, par l'intermédiaire de la sonnette intelligente (302, 402) à partir du dispositif via le réseau, l'indication de l'utilisateur ;
déterminer, par l'intermédiaire de la sonnette intelligente (302, 402), un nombre de fois où le carillon de sonnette déterminé doit être activé sur la base des une ou plusieurs règles, dans lequel les une ou plusieurs règles spécifient le nombre de fois où le carillon de sonnette déterminé doit être activé sur la base de l'indication de l'utilisateur, dans lequel l'étape consistant à amener le premier signal à être transmis pour activer le carillon de sonnette comprend l'étape consistant à :
amener, par l'intermédiaire de la sonnette intelligente (302, 402), le premier signal à être transmis conformément au nombre de fois.

2. Procédé mis en œuvre par ordinateur selon la revendication 1, dans lequel les une ou plusieurs règles spécifient une période de temps pendant laquelle le carillon de sonnette peut être activé, et dans lequel la détermination que le carillon de sonnette doit être activé sur la base des une ou plusieurs règles comprend l'étape consistant à :
déterminer, par l'intermédiaire de la sonnette intelligente (302, 402), que l'activation de l'élément d'interface utilisateur de la sonnette intelligente (302, 402) est détectée pendant la période de temps.

3. Procédé mis en œuvre par ordinateur selon la revendication 1, dans lequel la détermination que le carillon de sonnette doit être activé sur la base des une ou plusieurs règles comprend l'étape consistant à :
sélectionner, par l'intermédiaire de la sonnette intelligente (302, 402), le carillon de sonnette parmi une pluralité de carillons de sonnette sur la base des une ou plusieurs règles, dans lequel les une ou plusieurs règles spécifient quel carillon de sonnette parmi la pluralité de carillons de sonnette doit être activé sur la base d'une période de temps durant laquelle l'élément d'interface utilisateur de la sonnette intelligente (302, 402) est activé.

4. Procédé mis en œuvre par ordinateur selon la revendication 1, dans lequel la détermination que le carillon de sonnette doit être activé sur la base des une ou plusieurs règles comprend l'étape consistant à :
sélectionner, par l'intermédiaire de la sonnette intelligente (302, 402), le carillon de sonnette parmi une pluralité de carillons de sonnette sur la base des une ou plusieurs règles, dans lequel les une ou plusieurs règles spécifient quel carillon de sonnette parmi la pluralité de carillons de sonnette doit être activé sur la base de l'utilisateur qui active l'élément d'interface utilisateur de la sonnette intelligente (302, 402).

5. Procédé mis en œuvre par ordinateur selon la revendication 1, dans lequel l'étape consistant à amener le premier signal à être transmis pour activer le carillon de sonnette comprend au moins une des étapes consistant à :
amener, par l'intermédiaire de la sonnette intelligente (302, 402), le premier signal à être transmis à un haut-parleur de sonnette externe au boîtier (403) via une connexion filaire ; ou
transmettre sans fil, par l'intermédiaire de la sonnette intelligente (302, 402), le premier signal à un haut-parleur sans fil externe au boîtier (403).

6. Procédé mis en œuvre par ordinateur selon la revendication 1, comprenant en outre l'étape consistant à :
transmettre, par l'intermédiaire de la sonnette intelligente (302, 402), un second signal sans fil à un dispositif d'affichage externe au boîtier (403) qui amène le dispositif d'affichage à effectuer au moins une des étapes consistant à :
passer lui-même à un état de mise sous tension ; ou
afficher le flux vidéo.

7. Système, comprenant :
une sonnette intelligente ;
au moins une caméra vidéo ;
un dispositif exécutant une application de reconnaissance faciale ;
une ou plusieurs mémoires ; et
au moins un processeur couplé chacun à au moins une des une ou plusieurs mémoires et configuré pour effectuer des opérations consistant à :
détecter, par l'intermédiaire de la sonnette intelligente (302, 402), une activation d'un élément d'interface utilisateur d'une sonnette intelligente (302, 402) ; et
en réponse à la détection de l'activation de l'élément d'interface utilisateur :
déterminer, par l'intermédiaire de la sonnette intelligente (302, 402), qu'un carillon de sonnette doit être activé sur la base d'une ou plusieurs règles ;
amener, par l'intermédiaire de la sonnette intelligente (302, 402), un premier signal à être transmis pour activer le carillon de sonnette ; et
transmettre, par l'intermédiaire de la sonnette intelligente (302, 402), un signal sans fil à au moins une caméra vidéo qui n'est pas incluse dans un boîtier (402) de la sonnette intelligente (302, 402), dans lequel le signal sans fil amène la au moins une caméra vidéo à s'activer et à fournir un flux vidéo ;
dans lequel les opérations consistent en outre à :
obtenir, par l'intermédiaire de la au moins une caméra vidéo, une image d'un visage ou de caractéristiques faciales d'un utilisateur qui active l'élément d'interface utilisateur de la sonnette intelligente (302, 402) ;
transmettre, par l'intermédiaire de la au moins une caméra vidéo via un réseau, l'image au dispositif ;
détecter, par l'intermédiaire du dispositif utilisant l'application de reconnaissance faciale, l'utilisateur sur la base de l'image ;
transmettre, par l'intermédiaire du dispositif via le réseau, une indication de l'utilisateur détecté à la sonnette intelligente (302, 402) ;
recevoir, par l'intermédiaire de la sonnette intelligente (302, 402) à partir du dispositif via le réseau, l'indication de l'utilisateur ;
déterminer, par l'intermédiaire de la sonnette intelligente (302, 402), un nombre de fois où le carillon de sonnette déterminé doit être activé sur la base des une ou plusieurs règles, dans lequel les une ou plusieurs règles spécifient le nombre de fois où le carillon de sonnette déterminé doit être activé sur la base d'un utilisateur qui active l'élément d'interface utilisateur de la sonnette intelligente (302, 402), dans lequel l'étape consistant à amener le premier signal à être transmis pour activer le carillon de sonnette comprend l'étape consistant à :
amener, par l'intermédiaire de la sonnette intelligente (302, 402), le premier signal à être transmis conformément au nombre de fois.

8. Système selon la revendication 7, dans lequel les une ou plusieurs règles spécifient une période de temps pendant laquelle le carillon de sonnette peut être activé, et dans lequel la détermination que le carillon de sonnette doit être activé sur la base des une ou plusieurs règles comprend l'étape consistant à :
déterminer, par l'intermédiaire de la sonnette intelligente (302, 402), que l'activation de l'élément d'interface utilisateur de la sonnette intelligente (302, 402) est détectée pendant la période de temps.

9. Système selon la revendication 7, dans lequel la détermination que le carillon de sonnette doit être activé sur la base des une ou plusieurs règles comprend l'étape consistant à :
sélectionner, par l'intermédiaire de la sonnette intelligente (302, 402), le carillon de sonnette parmi une pluralité de carillons de sonnette sur la base des une ou plusieurs règles, dans lequel les une ou plusieurs règles spécifient quel carillon de sonnette parmi la pluralité de carillons de sonnette doit être activé sur la base d'une période de temps durant laquelle l'élément d'interface utilisateur de la sonnette intelligente (302, 402) est activé.

10. Système selon la revendication 7, dans lequel :
la détermination que le carillon de sonnette doit être activé sur la base des une ou plusieurs règles comprend l'étape consistant à
sélectionner, par l'intermédiaire de la sonnette intelligente (302, 402), le carillon de sonnette parmi une pluralité de carillons de sonnette sur la base des une ou plusieurs règles, dans lequel les une ou plusieurs règles spécifient quel carillon de sonnette parmi la pluralité de carillons de sonnette doit être activé sur la base de l'utilisateur qui active l'élément d'interface utilisateur de la sonnette intelligente (302, 402) ; et/ou
l'étape consistant à amener le premier signal à être transmis pour activer le carillon de sonnette comprend au moins une des étapes consistant à :
amener, par l'intermédiaire de la sonnette intelligente (302, 402), le premier signal à être transmis à un haut-parleur de sonnette externe au boîtier via une connexion filaire ; ou
transmettre sans fil, par l'intermédiaire de la sonnette intelligente (302, 402), le premier signal à un haut-parleur sans fil externe au boîtier (403).

11. Système selon la revendication 7, les opérations consistent en outre à :
transmettre, par l'intermédiaire de la sonnette intelligente (302, 402), un second signal sans fil à un dispositif d'affichage externe au boîtier qui amène le dispositif d'affichage à effectuer au moins une des étapes consistant à :
passer lui-même à un état de mise sous tension ; ou
afficher le flux vidéo.

12. Support non transitoire lisible par ordinateur sur lequel sont stockées des instructions qui, lorsqu'elles sont exécutées par un système comprenant une sonnette intelligente (302, 402) comprenant un boîtier (403), au moins une caméra vidéo et un dispositif exécutant une application de reconnaissance faciale, amènent le système à exécuter des opérations consistant à :
détecter, par l'intermédiaire de la sonnette intelligente (302, 402), une activation d'un élément d'interface utilisateur d'une sonnette intelligente ; et
en réponse à la détection de l'activation de l'élément d'interface utilisateur :
déterminer, par l'intermédiaire de la sonnette intelligente (302, 402), qu'un carillon de sonnette doit être activé sur la base d'une ou plusieurs règles ;
amener, par l'intermédiaire de la sonnette intelligente (302, 402), un premier signal à être transmis pour activer le carillon de sonnette ; et
transmettre, par l'intermédiaire de la sonnette intelligente (302, 402), un signal sans fil à au moins une caméra vidéo qui n'est pas incluse dans un boîtier de la sonnette intelligente, dans lequel le signal sans fil amène la au moins une caméra vidéo à s'activer et à fournir un flux vidéo ;
dans lequel les opérations consistent en outre à :
obtenir, par l'intermédiaire de la au moins une caméra vidéo, une image d'un visage ou de caractéristiques faciales d'un utilisateur qui active l'élément d'interface utilisateur de la sonnette intelligente (302, 402) ;
transmettre, par l'intermédiaire de la au moins une caméra vidéo via un réseau, l'image au dispositif ;
détecter, par l'intermédiaire du dispositif utilisant l'application de reconnaissance faciale, l'utilisateur sur la base de l'image ;
transmettre, par l'intermédiaire du dispositif via le réseau, une indication de l'utilisateur détecté à la sonnette intelligente (302, 402) ;
recevoir, par l'intermédiaire de la sonnette intelligente (302, 402) à partir du dispositif via le réseau, l'indication de l'utilisateur ;
déterminer, par l'intermédiaire de la sonnette intelligente (302, 402), un nombre de fois où le carillon de sonnette déterminé doit être activé sur la base des une ou plusieurs règles, dans lequel les une ou plusieurs règles spécifient le nombre de fois où le carillon de sonnette déterminé doit être activé sur la base d'un utilisateur qui active l'élément d'interface utilisateur de la sonnette intelligente (302, 402), dans lequel l'étape consistant à amener le premier signal à être transmis pour activer le carillon de sonnette comprend l'étape consistant à :
amener, par l'intermédiaire de la sonnette intelligente (302, 402), le premier signal à être transmis conformément au nombre de fois.

13. Support lisible par ordinateur non transitoire selon la revendication 12, dans lequel les une ou plusieurs règles spécifient une période de temps pendant laquelle le carillon de sonnette peut être activé, et dans lequel la détermination que le carillon de sonnette doit être activé sur la base des une ou plusieurs règles comprend l'étape consistant à :
déterminer, par l'intermédiaire de la sonnette intelligente (302, 402), que l'activation de l'élément d'interface utilisateur de la sonnette intelligente est détectée pendant la période de temps.

14. Support lisible par ordinateur non transitoire selon la revendication 12, dans lequel la détermination que le carillon de sonnette doit être activé sur la base des une ou plusieurs règles comprend les étapes consistant à :
sélectionner, par l'intermédiaire de la sonnette intelligente (302, 402), le carillon de sonnette parmi une pluralité de carillons de sonnette sur la base des une ou plusieurs règles, dans lequel les une ou plusieurs règles spécifient quel carillon de sonnette parmi la pluralité de carillons de sonnette doit être activé sur la base d'une période de temps pendant laquelle l'élément d'interface utilisateur de la sonnette intelligente est activé.

15. Support lisible non transitoire par ordinateur selon la revendication 12, dans lequel :
l'étape consistant à déterminer que le carillon de sonnette doit être activé sur la base des une ou plusieurs règles comprend l'étape consistant à sélectionner, par l'intermédiaire de la sonnette intelligente (302, 402), le carillon de sonnette parmi une pluralité de carillons de sonnette sur la base des une ou plusieurs règles, dans lequel les une ou plusieurs règles spécifient quel carillon de sonnette parmi la pluralité de carillons de sonnette doit être activé sur la base de l'utilisateur qui active l'élément d'interface utilisateur de la sonnette intelligente ; et/ou
l'étape consistant à amener le premier signal à être transmis pour activer le carillon de sonnette comprend au moins une des étapes consistant à :
amener, par l'intermédiaire de la sonnette intelligente (302, 402), le premier signal à être transmis à un haut-parleur de sonnette externe au boîtier via une connexion filaire ; ou
transmettre sans fil, par l'intermédiaire de la sonnette intelligente (302, 402), le premier signal à un haut-parleur sans fil externe au boîtier.
